# FASCICULE DE BREVET EUROPEEN

(11) **EP 2 533 866 B1**
(45) Date de publication et mention de la délivrance du brevet: **02.04.2014**
(21) Numéro de dépôt: 11702261.6
(22) Date de dépôt: 09.02.2011
(51) Int. Cl.: A63B 69/00, A63B 21/008, A63B 69/34, A63B 24/00

(54) **DISPOSITIF D'ENTRAINEMENT POUR DES JOUEURS DE RUGBY**
ÜBUNGSVORRICHTUNG FÜR RUGBYSPIELER
TRAINING DEVICE FOR RUGBY PLAYERS

(30) Priorité: 09.02.2010 FR 1000524
(43) Date de publication de la demande: 19.12.2012
(73) Titulaire: Thales, 92200 Neuilly-sur-Seine (FR)
(72) Inventeur: COUVET, Serge, F-95280 Jouy Le Moutier (FR); RETIERES, Didier, F-21700 Nuit Saint Georges (FR); VIDAL, Pierre Paul, F-75003 Paris (FR); PISCIONE, Julien, F-92410 Ville D'avray (FR)
(74) Mandataire: Lucas, Laurent Jacques
(86) Numéro de dépôt international: PCT/EP2011/051868
(87) Numéro de publication internationale: WO 2011/098469

(56) Documents cités:
- FR-A1- 2 861 313
- FR-A1- 2 892 941
- US-A1- 2004 144 288
- US-B1- 6 240 799

## Description

La présente invention concerne un dispositif de restitution d'efforts à six degrés de libertés, appliqué à un entrainement de joueurs de rugby, notamment pendant une phase de jeu nommée la mêlée. La présente invention trouve principalement son application dans la formation, l'entraînement, et le perfectionnement des joueurs de rugby de tous niveaux.

Dans une partie de rugby, une des phases du jeu particulièrement dangereuse, est la mêlée. Cette phase de jeu nécessite une bonne technicité individuelle et collective, ainsi qu'une excellente condition physique pour les joueurs de mêlée. En effet, les blessures se produisant lors de cette phase de jeu peuvent être très graves, en particulier pour le pilier droit et le talonneur du fait des forces mises en jeu et de leur position dans la mêlée. Dans la pratique du rugby, afin de s'entraîner techniquement et physiquement à la mêlée, les joueurs disposent d'équipements statiques comportant un joug frontal par exemple, à trois places, permettant de simuler une première ligne adverse notamment dans sa fonction de butée. Cependant, ces équipements ne permettent pas de préparer les joueurs à subir des forces importantes en déplacement telles que celles développées par exemple lors d'une poussée non réglementaire du pack adverse, lors d'un écroulement d'une mêlée. De plus ces équipements ne sont pas actifs et ne peuvent restituer au plus que l'énergie apportée et stockée par les joueurs.
Ce genre de lacune dans l'entrainement d'un joueur le rend d'autant plus fragile lors des matchs qu'il doit faire face à des forces inhabituelles et non reproduites en entraînement de peur de blessures.

Parmi les systèmes d'entrainements existants, un premier dispositif est décrit dans la demande de brevet FR2892941. Le premier dispositif est un appareil d'entrainement pour des joueurs de rugby, pouvant effectuer une mesure d'efforts produit par lesdits joueurs de rugby. Le premier dispositif comporte un joug de mêlé, monté sur un socle reposant sur le sol. Le socle et le joug peuvent effectuer une translation sous l'effet de la poussée des joueurs sur le joug. De plus, le joug est monté mobile sur le socle afin d'avoir un degré de liberté en rotation selon un axe sensiblement vertical.
Un deuxième dispositif décrit dans la demande de brevet FR 2861313 décrit un appareil destiné à la préparation musculaire ou technique d'une personne. Le deuxième dispositif comporte un bâti adapté à être posé sur le sol, des moyens d'appui servant de butées aux deux épaules de la personne s'entrainant et des moyens de liaison entre les moyens d'appuis et le bâti, lesdits moyens de liaison permettant un mouvement en translation selon un axe sensiblement horizontal des moyens d'appuis par rapport au bâti. De plus, les moyens de liaison permettent un degré de rotation autour d'un axe sensiblement horizontal des moyens d'appuis.
Les systèmes d'entrainement existants ne peuvent donc produire que deux degrés de liberté, un degré en translation et un degré en rotation selon un axe vertical. Ces dispositifs sont donc peu adaptés à un entrainement fin et tactique tel qu'exigé par le haut niveau de jeu du rugby actuel.
Les systèmes existants ont de plus des mouvements saccadés et brutaux voire dangereux pour les joueurs, du fait de l'utilisation de vérins pneumatiques ou de tendeurs. De plus certains de ces systèmes, utilisés uniquement en laboratoire, ne correspondent pas aux directives CE concernant la sécurité, CE étant un acronyme pour Conformité Européenne.

Un but de l'invention est notamment de pallier les inconvénients précités. A cet effet, l'invention a pour objet un dispositif d'entraînement pour des joueurs de rugby. Ledit dispositif comporte notamment :
- une plateforme de simulation par exemple de type plateforme de Stewart, sur laquelle peut être monté un joug d'entrainement ;
- un dispositif électronique d'asservissement de ladite plateforme de simulation ;
- un dispositif numérique de commande et de contrôle du dispositif d'entraînement ;
Le joug d'entraînement comporte notamment des têtes de joug. Chaque tête de joug peut être reliée à la plateforme de simulation par un capteur d'efforts. Les capteurs d'effort peuvent fournir des mesures utilisées pour l'asservissement de ladite plateforme de simulation.

Les mesures sont notamment transmises au dispositif informatique de commande et de contrôle pour archivage et présentation à un entraineur des joueurs.
Le dispositif informatique peut fournir des moyens pour programmer des séquences d'entrainement comportant une série de commandes de déplacements de la plateforme. La série de commandes peut être transmise au dispositif électronique d'asservissement pour mobiliser la plateforme de simulation.
Les capteurs d'efforts peuvent mesurer des forces et des moments appliqués par les joueurs sur les têtes de joug.
Le dispositif informatique peut comporter un dispositif de pilotage en temps réel de la plateforme de simulation, ledit dispositif de pilotage étant actionné par l'entraineur.

L'invention a notamment pour principaux avantages de permettre :
- un pilotage manuel ou automatique, par programmation de scénarios du dispositif d'entrainement ;
- un déplacement sûr, asservi en effort du joug ;
- des mesures de forces et de moments produits par chaque tête de joug ;
- un enregistrement des mesures et leur présentation de manière ergonomique ;
- une restitution d'efforts exercés pendant une mêlée par les avants adverses.

D'autres caractéristiques et avantages de l'invention apparaîtront à l'aide de la description qui suit, donnée à titre illustratif et non limitatif, et faite en regard des dessins annexés qui représentent :
- figure 1a : une première vue de la plateforme de simulation du dispositif selon l'invention ;
- figure 1b : une deuxième vue de la plateforme de simulation du dispositif selon l'invention ;
- figure 2 : le dispositif d'entrainement selon l'invention ;
- figure 3 : les degrés de liberté du joug de la plateforme de simulation selon l'invention ;

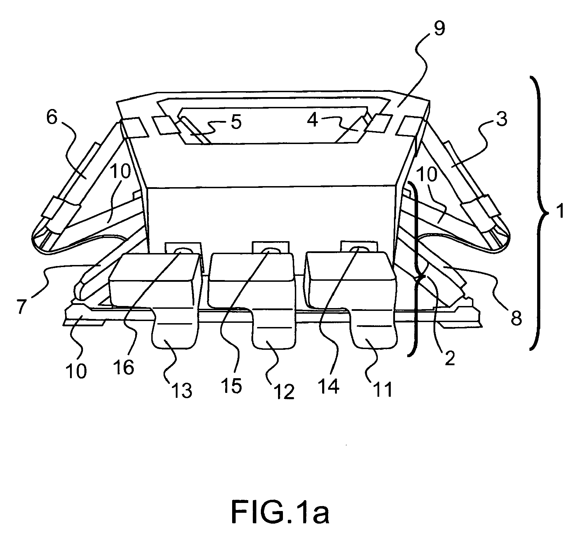

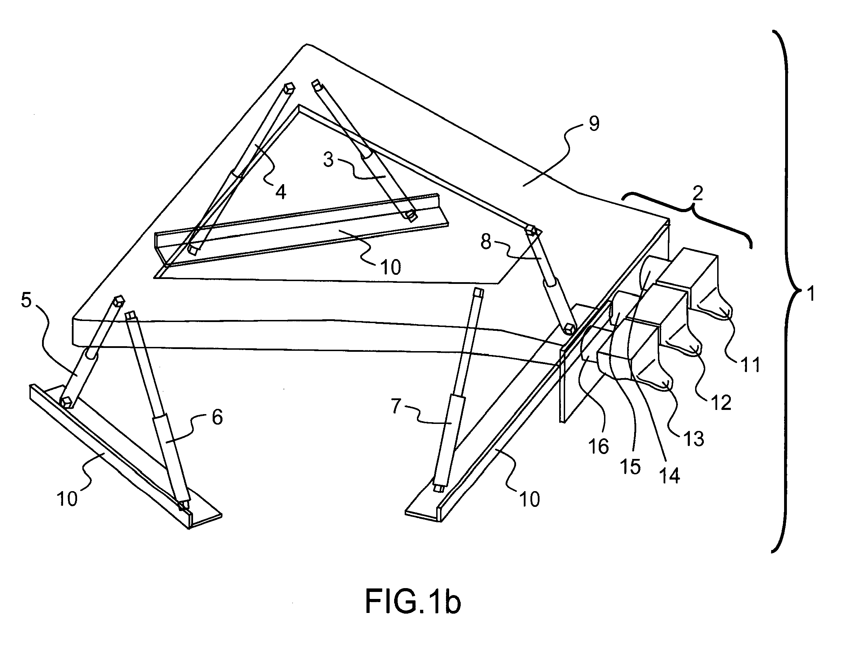

Les figures 1a et 1 b représentent deux vues différentes d'une plateforme de simulation 1 selon l'invention. La plateforme de simulation 1 selon l'invention est un dispositif adapté à un entrainement de joueurs de rugby, utilisé notamment pour un entrainement des joueurs à une mêlée avec une équipe adverse. Avantageusement, la plateforme de simulation 1 remplace l'équipe adverse pendant l'entrainement. La plateforme de simulation 1, produit un mouvement selon six axes, adapté à la mobilisation d'un joug 2 selon six degrés de liberté : trois degrés de liberté en translation, et trois degrés de liberté en rotation. Une telle plateforme de simulation est connue sous le nom de plateforme de Stewart, ou encore hexapode. Avantageusement, l'utilisation d'une plateforme de Stewart dans la plateforme de simulation 1 selon l'invention lui confère une grande stabilité, et permet des déplacements rapides et précis de la plateforme de simulation 1.
La plateforme de simulation 1 comporte six axes 3, 4, 5, 6, 7, 8. Chaque axe 3, 4, 5, 6, 7, 8 comporte un actionneur pouvant être réalisé par un vérin électrique. Chaque vérin électrique peut être actionné par un « moteur brushless », ou littéralement « moteur sans balai », avantageusement peu bruyant. La plateforme de simulation comporte également une palette 9 composé d'une plaque métallique. La palette 9, représentée sur les figures 1a et 1b, peut se présenter sous une forme polygonale, chaque polygone étant réalisé par un longeron métallique. Les axes 3, 4, 5, 6, 7, 8 sont reliés deux par deux par l'intermédiaire de trois premières articulations à la palette 9 d'une part et d'autre part à un socle 10. Sur les figures 1 a et 1 b, le socle 10 est représenté par trois baguettes 10 sur lesquelles sont fixés, par l'intermédiaire de deuxièmes articulations, les axes 3, 4, 5, 6, 7, 8. D'autres modes de réalisation du socle 10 peuvent bien entendu être envisagés, comme une plaque métallique d'un seul tenant. Les baguettes 10 peuvent être fixées sur une dalle d'un bâtiment par exemple. Le joug 2 comporte trois têtes de joug 11, 12, 13. Chaque tête de joug 11, 12, 13 est montée sur la palette 9 par l'intermédiaire d'un capteur d'effort 14, 15, 16. Les têtes de joug permettent aux trois joueurs de la première ligne de positionner leur tête et épaules dans le joug pour effectuer une poussée. Les capteurs d'efforts servent notamment à mesurer la force appliquée par les trois joueurs de la première ligne du pack de mêlée sur le joug 2. Traditionnellement, un pack comporte huit joueurs repartis en trois joueurs sur une première ligne, quatre joueurs sur une seconde ligne et un joueur sur la dernière ligne. Les capteurs d'efforts permettent également l'asservissement des vérins de mouvements des six axes 3, 4, 5, 6, 7, 8, comme expliqué ci-après. Le fait de placer les capteurs d'efforts 14, 15, 16 au plus prêt de la tête des joueurs avec des têtes de joug raides permet au dispositif d'entrainement d'assurer la sécurité des joueurs utilisateurs en mettant par exemple des limites aux forces appliquées sur les joueurs. La raideur des têtes permet de minimiser le retard temporel entre les efforts réellement appliqués sur le joueur et la mesure de son effort.
Avantageusement l'utilisation d'une telle plateforme selon l'invention dans le dispositif d'entrainement permet de disposer d'un dispositif d'entrainement robuste et fiable. En effet, l'utilisation de ce genre de plateforme 1 est approuvée depuis de nombreuses années pour des dispositifs d'entrainement au pilotage d'hélicoptères, d'aéronefs.

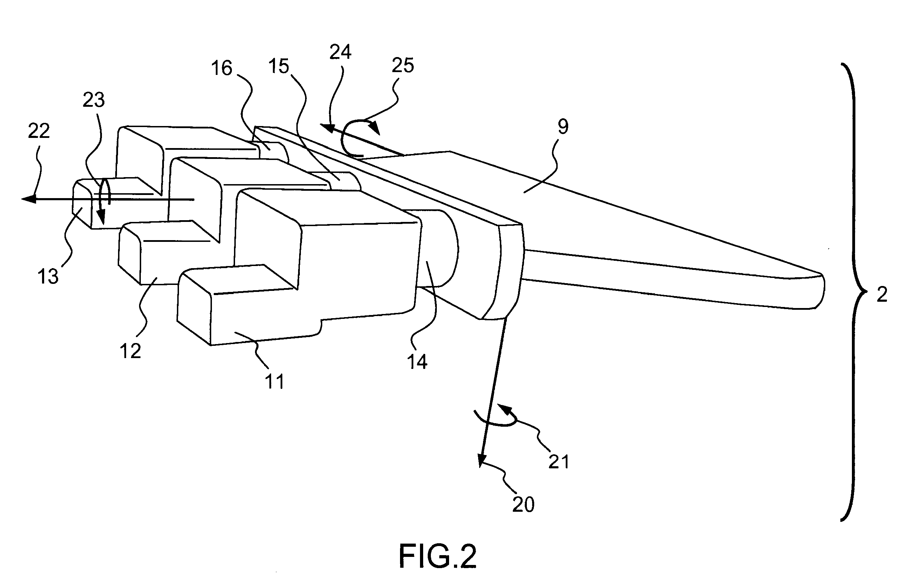

La figure 2 représente le joug 2 du dispositif d'entrainement 1 selon l'invention. Sur la figure 2 sont représentés les différents déplacements possibles selon différents degrés de liberté, du joug 2 pendant le fonctionnement de la plateforme de simulation selon l'invention 1. Un premier degré de liberté en translation est assuré selon un premier axe 20 sensiblement perpendiculaire à la palette 9. Un premier degré de liberté en rotation est notamment assuré par une première rotation 21 autour du premier axe 20. Un deuxième degré de liberté en translation est notamment assuré, par la plateforme 1, selon un deuxième axe 22 sensiblement perpendiculaire au premier axe 20 et colinéaire à une droite passant par un axe centrale d'un capteur de mouvement 14, 15, 16. Un deuxième degré de liberté en rotation 23 est assuré par la plateforme 1 autour du deuxième axe 22. Un troisième degré de liberté en translation 24 est assuré par la plateforme 1, selon un troisième axe 24 sensiblement perpendiculaire au premier axe 20 et au deuxième axe 22. Un troisième degré de liberté en rotation est assuré autour du troisième axe 24.

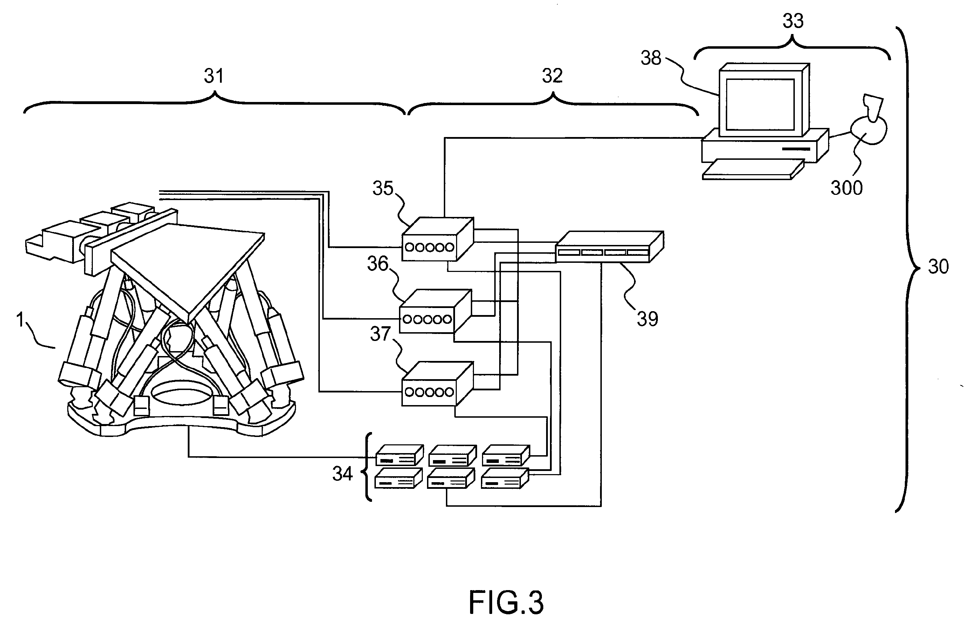

La figure 3 représente de manière schématique un exemple d'une architecture 30 du dispositif d'entrainement selon l'invention. L'architecture 30 représentée sur la figure 3 comporte trois parties distinctes 31, 32, 33. Une première partie 31 est une partie mécanique comportant la plateforme de simulation 1 selon l'invention.
Une deuxième partie 32 du dispositif selon l'invention est une partie électronique 32. La partie électronique 32 comporte notamment six variateurs de vitesse 34. Chaque variateur de vitesse 34 est branché sur un vérin d'un axe 3, 4, 5, 6, 7, 8 représenté sur les figures 1a et 1b. Les variateurs de vitesse 34 contrôlent la vitesse des moteurs de chaque vérin. Les régulateurs de puissance sont reliés à trois cartes électroniques 35, 36, 37. Les cartes électroniques 35, 36, 37 commandent un asservissement des vérins, c'est à dire leur élongation et leur vitesse. Les cartes électroniques 35, 36, 37 récupèrent également les informations provenant des capteurs d'efforts 14, 15, 16. Les informations provenant des capteurs d'efforts, c'est à dire les efforts appliqués sur les têtes des joueurs, sont amplifiées par les cartes électroniques avant d'être transmises à un ordinateur 38. La partie électronique comporte également une alimentation électrique 39 pour alimenter en courant d'un voltage adéquat les cartes électroniques 35, 36, 37 et les variateurs de vitesse 34.
Une troisième partie 33 du dispositif 30 selon l'invention est une partie numérique 33. Un ordinateur 38 permet de stocker dans une base de données les mesures des capteurs d'efforts 14, 15, 16. Les mesures peuvent ainsi être analysées par un entraineur après une séance d'entrainement par exemple. Les mesures, c'est à dire les forces et les moments exercés par les joueurs, peuvent également être visualisées en temps réel sur une interface homme machine dédiée et s'exécutant sur l'ordinateur 38. L'ordinateur 38 peut également comporter un logiciel de commande de la plateforme de simulation 1. Le logiciel de commande permet de commander la plateforme de simulation 1 dans tous ses degrés de liberté, avec une réponse analogue à celle d'un pack de mêlée adverse. Le logiciel de commande peut être lui-même contrôlé via une interface homme machine permettant de préprogrammer des séquences d'entrainement. Par exemple il est possible de simuler automatiquement soit des mouvements simples de la mêlée comme une rotation ou une translation, soit des combinaisons de mouvements de rotation et de translation. Le logiciel de commande peut également être piloté en temps réel par un entraineur à l'aide d'un « joystick » ou manche à balai 300 par exemple.

Avantageusement il est ainsi possible de paramétrer le dispositif d'entrainement pour un fonctionnement à puissance réduite dans un but d'apprentissage tactique et/ou de compréhension de situations à risque.
Le dispositif selon l'invention peut également utiliser une modélisation théorique d'une mêlée composée de joueurs adverses, pour lesquels on dispose, notamment, d'une estimation ou de mesures : de paramètres géométriques, de paramètres d'inertie, de caractéristiques de puissance, afin de produire des phases d'entrainement.
Une autre application possible du dispositif selon l'invention est de connecter à distance deux dispositifs selon l'invention situés dans deux lieux distincts et entrainants en temps réel deux équipes différentes. Le premier dispositif enregistre les forces et les moments appliqués par les joueurs de la première équipe sur le premier dispositif. Le premier dispositif transmet les mesures au deuxième dispositif qui en fonction de ces mesures retransmet les forces et les moments à la deuxième équipe par l'intermédiaire du deuxième dispositif. Il est également possible par exemple pour deux équipes de niveaux différents d'appliquer un coefficient réducteur sur les efforts et les moments appliqués par le deuxième dispositif. Avantageusement, le système selon l'invention peut alors permettre à deux équipes de même niveau ou de niveau différent de s'entraîner à distance et ensemble. Le dispositif selon l'invention agit alors en transformateur d'effort entre les deux packs de mêlées.

Le dispositif selon l'invention permet de reproduire les mouvements d'une mêlée composée de joueurs adverses afin d'établir des scénarios d'entrainement. Les scénarios d'entrainement peuvent être réalisés en programmant par exemple des schémas tactiques spécifiques, une configuration spécifique pour une préparation de match.
Avantageusement, ledit dispositif peut être utilisé en réseau pour effectuer un entrainement à distance de deux équipes, lesdits dispositifs reproduisant les efforts de chacune des équipes contre l'équipe adverse.
Le dispositif selon l'invention permet avantageusement de proposer un joug ergonomique et dynamique à une ligne d'avants d'une équipe de rugby, comportant notamment un pilier droit, un talonneur, un pilier gauche. De plus, le dispositif selon l'invention permet de restituer des efforts, des vitesses et des déplacements selon six degrés de liberté comme dans une mêlée réelle.

## Revendications

1. Dispositif d'entrainement (30) pour des joueurs de rugby, **caractérisé en ce qu'**il comporte :
• une plateforme de simulation (1), sur laquelle est monté un joug d'entrainement (2) ;
• un dispositif électronique (32) d'asservissement de ladite plateforme de simulation (1) ;
• un dispositif numérique (33) de commande et de contrôle du dispositif d'entrainement (30) ;
ledit joug d'entrainement (2) comportant des têtes de joug (11, 12, 13), chaque tête de joug (11, 12, 13) étant reliée à la plateforme de simulation (1) par un capteur d'efforts (14, 15, 16), ledit capteur d'effort (14, 15, 16) fournissant des mesures utilisées pour l'asservissement de ladite plateforme de simulation (1) ; lesdites mesures étant transmises au dispositif informatique de commande et de contrôle (33) pour archivage et présentation à un entraineur des joueurs, **caractérisé en ce que** la plateforme de simulation est de type plateforme de Stewart.

2. Dispositif d'entrainement selon la revendication 1, **caractérisé en ce que** le dispositif informatique (33) fournit des moyens pour programmer des séquences d'entrainement comportant une série de commandes de déplacements de la plateforme, ladite série de commandes étant transmise au dispositif électronique d'asservissement (32) pour mobiliser la plateforme de simulation (1).

3. Dispositif d'entrainement selon l'une quelconque des revendications précédentes, **caractérisé en ce que** lesdits capteurs d'efforts (14, 15, 16) mesurent des forces et des moments appliqués par les joueurs sur les têtes de joug (11, 12, 13).

4. Dispositif d'entrainement selon l'une quelconque des revendications précédentes, **caractérisé en ce que** le dispositif informatique (33) comporte un dispositif de pilotage (300) en temps réel de la plateforme de simulation (2), ledit dispositif de pilotage (300) étant actionné par l'entraineur.

## Patentansprüche

1. Trainingsgerät (30) für Rugby-Spieler, **dadurch gekennzeichnet, dass** es Folgendes umfasst:
• eine Simulationsplattform (1), auf der ein Trainingsjoch (2) montiert ist;
• ein elektronisches Gerät (32) zum Regeln der Simulationsplattform (1);
• ein digitales Gerät (33) zum Anweisen und Steuern des Trainingsgeräts (30);
wobei das Trainingsjoch (2) Jochköpfe (11, 12, 13) umfasst, wobei jeder Jochkopf (11, 12, 13) mit der Simulationsplattform (1) durch einen Kraftsensor (14, 15, 16) verbunden ist, wobei der Kraftsensor (14, 15, 16) Messwerte liefert, die für die Regelung der Simulationsplattform (1) benutzt werden, wobei die Messwerte zur Archivierung und Ansicht für einen Spielertrainer zu dem Befehls- und Steuercomputergerät (33) gesendet wird, **dadurch gekennzeichnet, dass** die Simulationsplattform vom Stewart-Plattformtyp ist.

2. Trainingsgerät nach Anspruch 1, **dadurch gekennzeichnet, dass** das Computergerät (33) Mittel zum Programmieren von Trainingssequenzen liefert, die eine Reihe von Befehlen zum Bewegen der Plattform umfassen, wobei die Reihe von Befehlen zu dem elektronischen Regelgerät (32) zum Mobilisieren der Simulationsplattform (1) gesendet wird.

3. Trainingsgerät nach einem der vorherigen Ansprüche, **dadurch gekennzeichnet, dass** die Kraftsensoren (14, 15, 16) von den Spielern auf die Jochköpfe (11, 12, 13) aufgebrachte Kräfte und Momente messen.

4. Trainingsgerät nach einem der vorherigen Ansprüche, **dadurch gekennzeichnet, dass** das Computergerät (33) ein Gerät (300) zum Steuern der Simulationsplattform (2) in Echtzeit umfasst, wobei das Steuergerät (300) vom Trainer aktiviert wird.

## Claims

1. A training device (30) for rugby players, **characterised in that** it comprises:
• a simulation platform (1), onto which a training yoke (2) is mounted;
• an electronic device (32) for the control of said simulation platform (1);
• a digital device (33) for commanding and controlling said training device (30);
said training yoke (2) comprising yoke heads (11, 12, 13), each yoke head (11, 12, 13) being connected to said simulation platform (1) via a force sensor (14, 15, 16), said force sensor (14, 15, 16) supplying measurements used for the control of said simulation platform (1), said measurements being transmitted to said command and control computer device (33) for archiving and for presenting to a player coach, **characterised in that** said simulation platform is of the Stewart platform type.

2. The training device according to claim 1, **characterised in that** said computer device (33) supplies means for programming training sequences comprising a series of commands for moving said platform, said series of commands being transmitted to said electronic device for control (32) in order to mobilize said simulation platform (1).

3. The training device according to any one of the preceding claims, **characterised in that** said force sensors (14, 15, 16) measure forces and moments applied by the players onto said yoke heads (11, 12, 13).

4. The training device according to any one of the preceding claims, **characterised in that** said computer device (33) comprises a device (300) for the real-time control of said simulation platform (2), said control device (300) being activated by the coach.
